# EUROPEAN PATENT SPECIFICATION

(11) **EP 3 919 261 B1**
(45) Date of publication and mention of the grant of the patent: **11.09.2024**
(21) Application number: 20382467.7
(22) Date of filing: 01.06.2020
(51) Int. Cl.: B29C 65/16, B29C 65/78, B31D 5/00

(54) **LONGITUDINAL WELDING STATION FOR AN INSTALLATION FOR MANUFACTURING PACKAGES WITH PADS**
LÄNGSSCHWEISSSTATION FÜR EINE ANLAGE ZUR HERSTELLUNG VON VERPACKUNGEN MIT PADS
STATION DE SOUDAGE LONGITUDINAL POUR UNE INSTALLATION DE FABRICATION D'EMBALLAGES AVEC PADS

(43) Date of publication of application: 08.12.2021
(73) Proprietor: AGIL PACKAGING System, S.L., Navarra (ES)
(72) Inventor: REDONDO GARCIA, Eladio Eduardo, 31008 Pamplona (ES); ARDANAZ YUNTA, Miguel Angel, 31174 Ciriza (ES)
(74) Representative: Igartua, Ismael

(56) References cited:
- US-A- 3 765 990
- US-A- 5 184 447
- US-A1- 2002 152 722
- US-A1- 2010 050 571

## Description

### TECHNICAL FIELD

The present invention relates to welding stations of installations for manufacturing packages with pads, comprising a plurality of longitudinal welding heads, and to installations for manufacturing packages with pads comprising at least one of said welding stations.

### PRIOR ART

Some consumer items are transported protected by a special package. This type of packages is formed by plastic sheets comprising air pads or bubbles, according to the case.

In some cases, the package is general and is only modified in size in accordance with the size of the item to be packaged. In other cases, however, the packages are adapted to the size of the item that they are going to protect. In this latter case, furthermore, it is possible for the package to be formed by several parts to this be able to arrange it in different areas of the item to be protected.

In these latter cases, the package is of the type formed by pads. These packages are generally formed from two sheets which are joined or welded to one another both longitudinally and transversely, how and where required, forming independent sectors therebetween (as a result of the different welds). If necessary, it is possible to keep a communication between the sectors. During the manufacture of the packages, the sectors are filled with air selectively, being left empty or full of air in accordance with requirements. A sector full of air is what is known as pad.

EP3018071A1, of the same applicant, discloses an installation for manufacturing packages with pads. This installation comprises a plurality of longitudinal welding heads arranged in group, to be able to carry out different longitudinal welds between two superposed plastic sheets.

US2008/0022630A1 also discloses an installation for manufacturing packages with pads, with a welding station comprising a welding head for carrying out longitudinal welds between two superposed sheets. The welding head comprises two sealing blocks between which the sheets are arranged to be welded or sealed to one another. The sealing blocks are hot and the sheets are welded by contact. This type of welds has the great drawback of the advance speed of the sheets being limited, mainly due to the need of contact of the sheets with the welding blocks, and of keeping said contact to heat the sheets.

US2010/050571A1 discloses an apparatus for inflating and sealing packing cushions has a drive mechanism for feeding a preconfigured film material to a sealing mechanism in a flattened state without wrinkles in the sealing region in which a longitudinal seal is formed. In one aspect, the drive mechanism comprises a pair of upper adjacent belts and a backing element. such as a lower belt. The sealing mechanism may be a rotary sealing wheel that contacts the film material between the upper adjacent belts.

US3765990A discloses an apparatus for side sealing packages made of plastic films and consists of a rotary member having a heated sealing and cutting blade to the side of which is another blade, heated by the first blade, the two blades forming a pair of seals. The blades bear against a moving belt which also supports the package, and a pair of upper belts are provided one to each side of the rotary member, these belts working in conjunction on the upper side of the seal to remove any tension thereon during and immediately after sealing.

US2002/152722A1 discloses a method and apparatus for forming a tamper resistant seal on a plastic bag containing a loaf of bread or other products. The neck of the bag is flattened, gripped between a pair of upper inboard and outboard gathering belts and a pair of lower inboard and outboard gathering belts adjacent opposite sides of a segment of the neck of the bag.

US5184447A discloses a bag closing machine with a pair of endless belt mounted in a housing and having adjacent runs extending along a passage in the housing. The belts are driven to cause bags to be conveyed successively between the runs along the passage. A heating station adjacent the passage is operable to heat sealing areas of the bags to activate heat sealable material in a bag closing manner.

### DISCLOSURE OF THE INVENTION

The object of the invention is to provide a welding station comprising a plurality of longitudinal welding heads and an installation comprising a welding station, as defined in the claims A longitudinal welding head is adapted to join or weld to one another two superposed sheets as said sheets advance in a first direction. The head comprises a welding device configured to apply heat on a determined action area of the head to carry out said welding by heat.

The longitudinal welding head comprises a main body, a first traction belt wound to the main body and a second traction belt wound to the main body, parallel to the first traction belt and separated from the first traction belt by a determined separation gap in a second direction which is preferably transverse to the first direction. The main body comprises a first drive wheel with a first central shaft extending in the second direction, and a second drive wheel with a second central shaft extending parallel to the first central shaft and distant from said first central shaft in the first direction. Both traction belts are wound in both drive wheels of the main body.

The action area on which heat is applied is in the separation gap defined between both traction belts, such that the welding between the sheets can be carried out in parts of said sheets which move facing said separation gap, between both traction belts. Thus, in the head a sealed area can be delimited between both traction belts, it being possible to apply the welding to join both sheets to one another in a secure and efficient manner.

An aspect of the invention relates to a welding station comprising a plurality of longitudinal welding heads such as the one previously described, each of the welding heads being configured to be able to move along the second direction, and another aspect of the invention relates to an installation comprising at least one of said welding stations.

These and other advantages and features of the invention will become evident in view of the figures and of the detailed disclosure of the invention.

### DESCRIPTION OF THE DRAWINGS

Figure 1 shows an embodiment of a welding head of a welding station according to the invention.
Figure 2 shows in perspective the welding head of the embodiment of Figure 1.
Figure 3 shows another embodiment of a welding head of a welding station according to the invention.
Figure 4 shows an embodiment of a welding station according to the invention.
Figure 5 shows an embodiment of an installation for manufacturing packages with pads according to the invention.

### DETAILED DISCLOSURE OF THE INVENTION

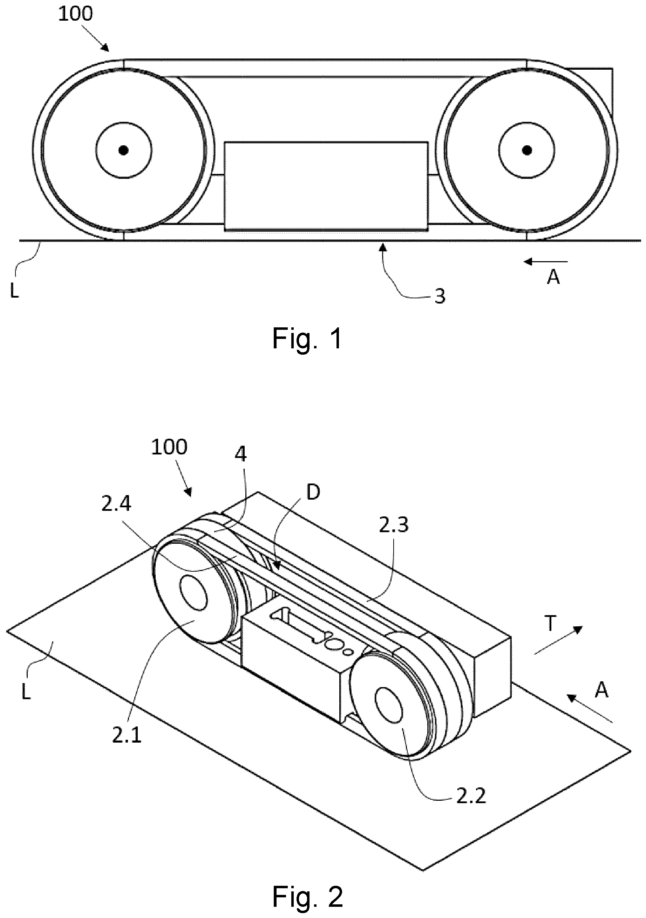

A longitudinal welding head 100 is adapted to be used in installations 1000 in which packages with pads are manufactured. The head 100 is configured to act on two superposed sheets L advancing in a determined first direction A (the figures depict the assembly formed by the superposed sheets L), facing said head 100, as shown in Figure 1, and to weld or join said sheets L to one another in areas of said sheets L on which said head 100 acts. To that end, the head 100 comprises a welding device, not depicted in the figures, configured to apply heat to a determined action area 3 of said head 100, or facing said head 100, such that when the sheets L pass through said action area 3, the sheets are joined or welded to one another by heat. The first direction A is preferably linear, the head 100 thus being configured to carry out longitudinal welds on the sheets L as said sheets L advance linearly.

The head 100 comprises a first traction belt 2.3 and a second traction belt 2.4 arranged in parallel to the first traction belt 2.3 and separated from the first traction belt 2.3 by a determined separation gap D in a second direction T, which is preferably transverse to the first direction A.

The head 100 comprises a first drive wheel 2.1 with a first central shaft 2.10 extending in the second direction T, and a second drive wheel 2.2 with a second central shaft 2.20 extending parallel to the first central shaft 2.10 and distant from said first central shaft 2.10 in the first direction A. Both traction belts 2.3 and 2.4 are wound in both drive wheels 2.1 and 2.2, as shown in Figure 2. The action area 3 is arranged in, or facing, said separation gap D. In this way, when the sheets L move, the areas of said sheets L which are in contact and/or facing said action area 3 are affected by said heat and are welded or joined to one another.

Alternatively, the head 100 can comprise a respective drive wheel for each traction belt 2.3 and 2.4 associated with each central shaft 2.1 and 2.2.

The drive wheels 2.1 and 2.2 are configured to rotate with respect to their respective central shafts 2.10 and 2.20, transmitting this rotation to the traction belts 2.3 and 24 which, in turn, aid the sheets L in moving in the first direction A (they pull the sheets L in said first direction A). The rotation of all drive wheels 2.1 and 2.2 is synchronized, and it is also synchronized with a traction device causing the movement of the sheets L in the first direction A, in the cases in which a traction device of this type is required. In some embodiments, one of the drive wheels 2.1 and 2.2 is motor-driven and the head 100 comprises means for transmitting the rotation of said drive wheel 2.1 or 2.2 to the other drive wheel 2.1 or 2.2. In other embodiments, all the drive wheels 2.1 and 2.2 are motor-driven.

In some embodiments, the head 100 comprises a separating element 4 joined to each of the drive wheels 2.1 and 2.2, the first traction belt 2.3 being on one side of said separating element 4 with respect to the corresponding central shaft 2.10 and the second traction belt 2.4 being on the other side of said separating element 4. Said separating element 4 preferably comprises a width equal to the width of the separation gap D in the second direction T. The outer surface of the separating element 4 of the head 100 is preferably at the same level as the outer surface of the traction belts 2.3 and 2.4. Thus, if the head 100 rests on a support (pressing, therefore, the sheets L against said support), a sealed area is generated between both traction belts 2.3 and 2.4 and both separating elements 4, the action area 3 being in said sealed area. As a result of the sealed area, by moving the sheets L between said support and the head 100 in the first direction A, the welding between said sheets L can be carried out securely and in an environment isolated from the exterior (in the sealed area), such that most of the heat applied in the action area is furthermore taken advantage of to carry out the required welding, a more effective welding being achieved. This furthermore allows having a welding device of a power adapted to the requirements to be met in order to carry out the welding, without needing to size it in excess due to the possible heat losses.

To bear the traction belts 2.3 and 2.4 in the drive wheels 2.1 and 2.2, said drive wheels 2.1 and 2.2 can comprise different configurations. In some embodiments of the head 100, the drive wheels 2.1 and 2.2 comprise a respective groove configured to house each traction belt 2.3 and 2.4, the two grooves of each drive wheel 2.1 and 22 being separated by a distance equal to the width of the separation gap D. In this case, the separating elements 4 could be dispensed with since the configuration of the grooves would fulfill the function of the separating elements 4. In other embodiments of the head 100, the drive wheels 2.1 and 2.2 are gear wheels and the traction belts 2.3 and 2.4 comprise a configuration complementary to the teeth of said drive wheels 2.1 and 2.2. In these cases, the separating elements 4 could be dispensed with depending on the configuration of the drive wheels 2.1 and 2.2 and of the traction belts 2.3 and 2.4, depending on whether or not this configuration allows the movement of the traction belts 2.3 and 2.4 (in which case the use of the separating elements 4 would be advantageous).

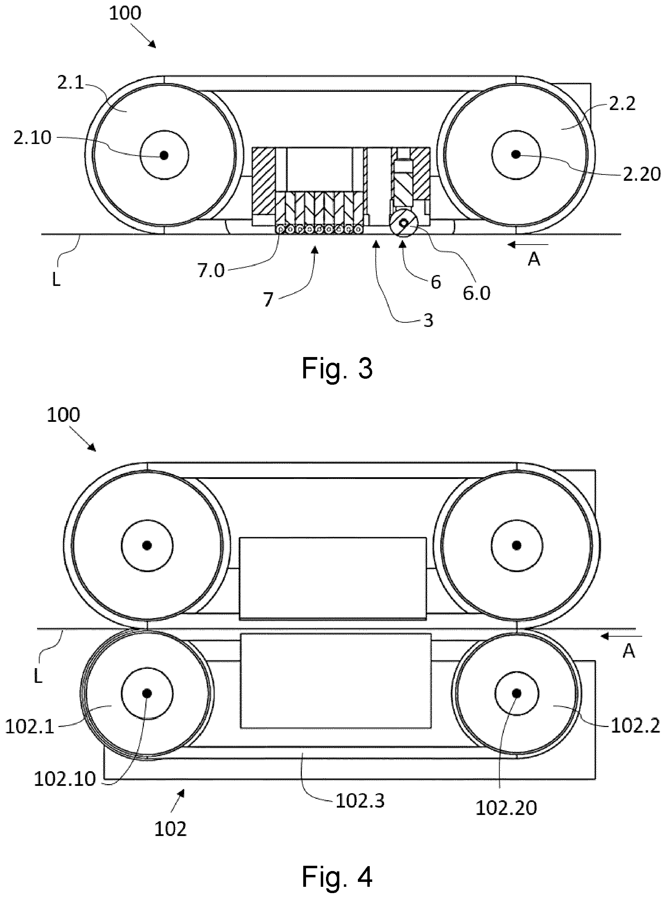

In some embodiments, such as the shown by way of example in Figure 3, the head 100 comprises a holding-down device 7 with at least one hold-down member 7.0 arranged downstream of the action area 3 in the first direction A and configured to press on the already welded sheets L. Thus, when the sheets L move in the first direction A on a support, the holding-down device 7 presses said sheets L against said support, keeping the previously made weld joined to assure to a greater extent that it is correctly completed until it as cooled down. Preferably, furthermore, the holding-down device 7 comprises a plurality of hold-down members 7.0 arranged in series in the first direction A, and said hold-down members 7.0 can exert the same force on the sheets L or can be configured such that the pressure force that can be applied by each of the hold-down members 7.0 can be controlled independently. The latter would allow adjusting the force for different types of sheets L or different speeds of movement of the sheets L in the first direction A, for example.

In some embodiments, the head 100 comprises a cooling device not depicted in the figures, to cool the sealed area which is generated in the separation gap D present between both traction belts 2.3 and 2.4, downstream of the action area 3 in the first direction A. In the embodiments in which the head 100 comprises a holding-down device 7, the cooling device is preferably configured to cool the area of the separation gap D downstream of said holding-down device 7 in the first direction A, and/or in the areas of the separation gap D in which the holding-down device 7 acts. Thus, the cooling of the sheets L after being welded is accelerated with the cooling device, the welding carried out being ensured to a greater extent since the risk of said welding being separated downstream of the head 100 in the first direction A for any reason is reduced.

The welding deice preferably comprises a laser emitter emitting a laser beam towards the action area 3, directly or by means of additional elements (such as mirrors, for example) arranged between said welding device 1 and said action area 3 to redirect said laser beam towards said action area 3. The welding device is preferably configured so that the heat reaches the action area vertically.

An aspect of the invention relates to a welding station 500 for an installation 1000 for manufacturing packages with pads, comprising a plurality of longitudinal welding heads 100 such as the one previously described, in any of its configurations and/or embodiments.

In some embodiments, the welding station 500 comprises a support which is facing said head 100 and configured so that the sheets L move between it and the head 100 in the first direction A. The head 100 is facing the support such that the traction belts 2.3 and 2.4 press the sheets L against said support (but with a force allowing the movement of said sheets L in the first direction A), and cause or aid in the traction of said sheets L as has been previously described, the sealed area previously described being generated between said support and the head 100. In these embodiments, the head 100 preferably comprises an actuator 6 which is arranged upstream of the action area 3 in the first direction A and configured to push the sheets L to be welded against the support, as depicted in Figure 3, such that it is ensured that said sheets L reach the action area 3 tensioned and that the welding can be carried out as effectively and securely as possible. Furthermore, the actuator 6 preferably comprises a pressure wheel 6.0 and the support comprises a depression complementary with the pressure wheel 6.0 (not depicted in the figures) and facing said pressure wheel 6.0, to ensure to a greater extent the generation of the tension in the sheets L.

In other embodiments, the support is selected from:
- a support surface, said support surface and the head 100 being arranged such that the traction belts 2.3 and 2.4 of the head 100 press the sheets L against said support surface; and
- a support head 102, as shown in Figure 4, the support head 102 comprising two traction belts 102.3 (in the figures only one is depicted), similar to those of the head 100, and said support head 102 and said head 100 being facing one another and arranged such that the sheets L are pressed between the corresponding traction belts 2.3 and 2.4 of both heads 100 and 102. The support head 102 further comprises a support surface which is at the same level as the traction belts of said support head 102, in the part of said traction belts facing the head 100, such that the sheets L move in the first direction A on said support surface. The support surface is facing the action area 3, and delimits the previously described sealed area.

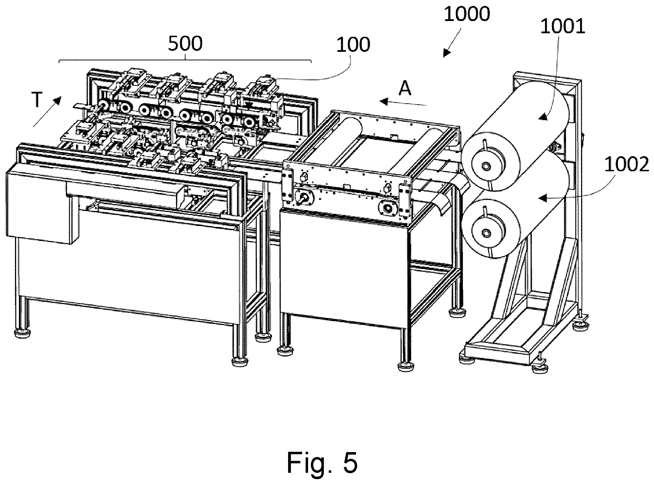

In any embodiment, the welding station 500 comprises a plurality of longitudinal welding heads 100, each one, preferably, with a facing support, each of the welding heads 100 being configured to be able to move along the second direction T. This allows carrying out a plurality of longitudinal welds of the sheets L, parallel to one another, when the heads 100 are arranged in different positions along said second direction T. Each head 100 is preferably arranged in a determined position along the first direction A, said positions being different from one another (as can be seen in Figure 5). When the support is a support surface, the same support surface can be facing all the heads 100, whereas when the support comprises a support head 102, each head 100 has associated a support head 102.

Another aspect of the invention relates to an installation 1000 for manufacturing packages with pads, such as the one shown by way of example in Figure 5. The installation 1000 comprises a respective feeder 1001 and 1002 for feeding each of the two sheets L, and at least one welding station 500 such as the one previously described, in any of its configurations and/or embodiments. When the installation 1000 comprises a plurality of heads 100, as in the embodiment shown in Figure 5 for example, each of the heads 100 is arranged in a determined position along the second direction T, said positions being different from one another. This allows carrying out different longitudinal welds on the sheets L, along their width (in the second direction T).

## Claims

1. Welding station (500) comprising a plurality of longitudinal welding heads (100) for an installation for manufacturing packages with pads, each head (100) being configured to weld to one another two superposed sheets (L) as said sheets (L) advance in a first direction (A), each head (100) comprising a welding device configured to apply heat on a determined action area (3) of said head (100) or facing said head (100), a first traction belt (2.3) and a second traction belt (2.4) parallel to the first traction belt (2.3) and separated from the first traction belt (2.3) by a determined separation gap (D) in a second direction (T) which is transverse to the first direction (A), the action area (3) being arranged in said separation gap (D) between both traction belts (2.3, 2.4), or facing said separation gap (D), and each of the welding heads (100) being configured to be able to move along the second direction (T).

2. Welding station according to claim 1, wherein each head (100) comprises a first drive wheel (2.1) with a first central shaft (2.10) extending in the second direction (T) and a second drive wheel (2.2) with a second central shaft (2.20) parallel to the first central shaft (2.10) and distant from said first central shaft (2.10) in the first direction (A), both traction belts (2.3, 2.4) being wound in both drive wheels (2.1, 2.2).

3. Welding station according to claim 2, wherein each head (100) comprises a separating element (4) joined to, or arranged in, each of the drive wheels (2.1, 2.2), the first traction belt (2.3) being on one side of said separating element (4) with respect to the corresponding central shaft (2.10) and the second traction belt (2.4) being on the other side of said separating element (4), said separating element (4) comprising a width in the second direction (T) equal to the width of the separation gap (D).

4. Welding station according to claim 3, wherein the outer surface of the separating element (4) of each head (100) is at the same level as the outer surface of the traction belts (2.3, 2.4) or is of a malleable material projecting from said outer surface of the traction belts (2.3, 2.4).

5. Welding station according to any of claims 2 to 4, wherein each drive wheel (2.1, 2.2) comprises a respective groove for each traction belt (2.3, 2.4), each groove being configured to house the corresponding traction belt (2.3) and both grooves of one and the same drive wheel (2.3, 2.4) being separated by a distance equal to the width of the separation gap (D).

6. Welding station according to any of claims 2 to 4, wherein the two drive wheels (2.1, 2.2) are gearwheels and the traction belts (2.3, 2.4) comprise a configuration complementary to the teeth of said drive wheels (2.1, 2.2).

7. Welding station according to any of claims 1 to 6, wherein each head (100) comprises a holding-down device (7) with at least one hold-down member (7.0) arranged downstream of the action area (3) in the first direction (A) and configured to press the welded sheets (L).

8. Welding station according to claim 7, wherein the holding-down device (7) comprises a plurality of hold-down members (7.0) arranged in series in the first direction (A).

9. Welding station according to claim 8, wherein the hold-down members (7.0) are configured to be able to independently control the pressure force which they can carry out on the sheets (L).

10. Welding station according to any of claims 1 to 9, wherein each head (100) comprises a cooling device for cooling the separation gap (D) present between both traction belts (2.3, 2.4), at least downstream of the action area (3) in the first direction (A).

11. Welding station according to any of claims 1 to 10, wherein each welding device comprises a laser emitter emitting a laser beam towards the action area (3), directly or by means of additional elements arranged between said welding device and said action area (3) to redirect said laser beam towards said action area (3).

12. Welding station according to any of claims 1 to 11, comprising a support associated with each head (100), said support being faced to the associated head (100) and configured so that the sheets (L) move on it in the first direction (A), a support and the associated head (100) being arranged such that the sheets move between the traction belts (2.3, 2.4) and said support, and the head (100) comprising an actuator (6) arranged upstream of the action area (3) in the first direction (A) and configured to push the sheets (L) to be welded against the associated support, the actuator (6) comprising a wheel and the associated support comprising a depression complementary with the wheel of the actuator (6) and facing said wheel.

13. Welding station according to any of claims 1 to 11, comprising a support associated with each head (100), said support being faced to the associated head (100) and configured so that the sheets (L) move in the first direction (A) between said support and said associated head (100), the support and the associated head (100) being facing one another and said support being selected from
a support surface, said support surface and the associated head (100) being arranged such that the traction belts (2.3, 2.4) of said head (100) press the sheets (L) against said support surface; and
a support head (102) comprising a first drive wheel (102.1) with a first central shaft (102.10) extending in the second direction (T) and a second drive wheel (102.2) with a second central shaft (102.20) extending parallel to the first central shaft (102.10) and distant from said first central shaft (102.10) in the first direction (A), a first traction belt (102.3) wound in both drive wheels (102.1, 102.2), and a second traction belt wound in both drive wheels (102.1, 102.2) in parallel to the first traction belt and separated from the first traction belt by the separation gap (D) in the second direction (T), said support head (102) and the associated head (100) being arranged such that the sheets (L) are pressed between the corresponding traction belts (2.3, 2.4) of both heads (100, 102), the support head (102) further comprising a support surface which is at the same level as the traction belts (102.1, 102.2) of said support head (102), in the part of said traction belts (102.1, 102.2) facing the associated welding head (100), said support surface being facing the welding area (3).

14. Installation for manufacturing packages with pads, **characterized in that** it comprises at least one welding station (500) according to any of claims 1 to 13.

## Patentansprüche

1. Schweißstation (500), die eine Vielzahl von Längsschweißköpfen (100) für eine Anlage zur Herstellung von Verpackungen mit Pads umfasst, wobei jeder Kopf (100) zum Verschweißen zweier übereinanderliegender Lagen (L) beim Vorschub der genannten Lagen (L) in einer ersten Richtung (A) ausgelegt ist, wobei jeder Kopf (100) Folgendes umfasst: eine zum Erhitzen eines bestimmten Eingriffsbereichs (3) des genannten Kopfes (100) oder dem genannten Kopf (100) gegenüberliegenden Bereichs ausgelegte Schweißvorrichtung, einen ersten Zugriemen (2. 3) und einen zweiten Zugriemen (2.4), der parallel zu dem ersten Zugriemen (2.3) verläuft und durch einen bestimmten Trennspalt (D) in einer quer zur ersten Richtung (A) verlaufenden zweiten Richtung (T) von dem ersten Zugriemen (2.3) getrennt ist, wobei der Eingriffsbereich (3) in dem genannten Trennspalt (D) zwischen den beiden Zugriemen (2.3, 2.4) angeordnet oder dem genannten Trennspalt (D) gegenüberliegt, und wobei jeder der Schweißköpfe (100) so ausgelegt ist, dass er sich in die zweite Richtung (T) bewegen kann.

2. Schweißstation nach Anspruch 1, wobei jeder Kopf (100) ein erstes Antriebsrad (2.1) mit einer in der zweiten Richtung (T) verlaufenden ersten Mittelwelle (2.10) und ein zweites Antriebsrad (2.2) mit einer zur ersten Mittelwelle (2.10) parallelen und von der genannten ersten Mittelwelle (2.10) in der ersten Richtung (A) beabstandeten zweiten Mittelwelle (2.20) umfasst, wobei die beiden Zugriemen (2.3, 2.4) auf den beiden Antriebsrädern (2.1, 2.2) aufgezogen sind.

3. Schweißstation nach Anspruch 2, wobei jeder Kopf (100) ein Trennelement (4) aufweist, das mit dem jeweiligen Antriebsrad (2.1, 2.2) verbunden oder daran angeordnet ist, wobei sich der erste Zugriemen (2.3) auf einer Seite des genannten Trennelements (4) relativ zu der entsprechenden Mittelwelle (2. 10) und der zweite Zugriemen (2.4) auf der anderen Seite des genannten Trennelements (4) befindet, wobei das genannte Trennelement (4) in der zweiten Richtung (T) so breit wie der Trennspalt (D) ist.

4. Schweißstation nach Anspruch 3, wobei die Außenfläche des Trennelements (4) eines jeden Kopfes (100) mit der Außenfläche der Zugriemen (2.3, 2.4) auf gleicher Höhe liegt oder aus einem über die genannte Außenfläche der Zugriemen (2.3, 2.4) hinausragenden verformbaren Material besteht.

5. Schweißstation nach einem der Ansprüche 2 bis 4, wobei jedes Antriebsrad (2.1, 2.2) eine entsprechende Nut für den jeweiligen Zugriemen (2.3, 2.4) aufweist, wobei jede Nut zur Aufnahme des entsprechenden Zugriemens (2.3) ausgestaltet ist und die beiden Nuten jeweils eines Antriebsrads (2.3, 2.4) um einen der Breite des Trennspalts (D) entsprechenden Abstand voneinander getrennt sind.

6. Schweißstation nach einem der Ansprüche 2 bis 4, wobei die beiden Antriebsräder (2.1, 2.2) Zahnräder sind und die Zugriemen (2.3, 2.4) eine zu den Zähnen der genannten Antriebsräder (2.1, 2.2) komplementäre Form aufweisen.

7. Schweißstation nach einem der Ansprüche 1 bis 6, wobei jeder Kopf (100) einen in der ersten Richtung (A) hinter dem Eingriffsbereich (3) angeordneten Niederhalter (7) mit mindestens einem Niederhalteelement (7.0) zum Andrücken der geschweißten Lagen (L) aufweist.

8. Schweißstation nach Anspruch 7, wobei der Niederhalter (7) eine Vielzahl von in der ersten Richtung (A) hintereinander angeordneten Niederhalteelementen (7.0) aufweist.

9. Schweißstation nach Anspruch 8, wobei die Niederhalteelemente (7.0) zur jeweils unabhängigen Regelung der von ihnen auf die Lagen (L) ausübbaren Druckkraft ausgestaltet sind.

10. Schweißstation nach einem der Ansprüche 1 bis 9, wobei jeder Kopf (100) zur Kühlung des Trennspalts (D) zwischen den beiden Zugriemen (2.3, 2.4), zumindest in der ersten Richtung (A) hinter dem Eingriffsbereich (3), eine Kühlvorrichtung aufweist.

11. Schweißstation nach einem der Ansprüche 1 bis 10, wobei jede Schweißvorrichtung einen Laserstrahler umfasst, der auf den Eingriffsbereich (3) entweder direkt oder mittels zusätzlicher zwischen der genannten Schweißvorrichtung und dem genannten Eingriffsbereich (3) angeordneter Elemente zur Umlenkung des genannten Laserstrahls auf den genannten Eingriffsbereich (3) einen Laserstrahl emittiert.

12. Schweißstation nach einem der Ansprüche 1 bis 11, mit einer jeweils einem Kopf (100) zugehörigen Auflage, wobei die genannte Auflage dem zugehörigen Kopf (100) gegenüberliegt und so beschaffen ist, dass sich die Lagen (L) darauf in der ersten Richtung (A) bewegen, wobei jeweils eine Auflage und der zugehörige Kopf (100) so angeordnet sind, dass sich die Lagen zwischen den Zugriemen (2.3, 2. 4) und der genannten Auflage bewegen, und der Kopf (100) ein in der ersten Richtung (A) vor dem Eingriffsbereich (3) angeordnetes Stellglied (6) umfasst, das zum Andrücken der zu verschweißenden Lagen (L) an die zugehörige Auflage ausgelegt ist, wobei das Stellglied (6) ein Rädchen umfasst und die zugehörige Auflage eine zu dem Rädchen des Stellglieds (6) komplementäre und dem genannten Rädchen gegenüberliegende Vertiefung aufweist.

13. Schweißstation nach einem der Ansprüche 1 bis 11, mit einer jeweils einem Kopf (100) zugehörigen Auflage, wobei die genannte Auflage dem zugehörigen Kopf (100) gegenüberliegt und so beschaffen ist, dass sich die Lagen (L) in der ersten Richtung (A) zwischen der genannten Auflage und dem genannten zugehörigen Kopf (100) bewegen, wobei sich die Auflage und der zugehörige Kopf (100) gegenüberliegen und die genannte Auflage ausgewählt ist aus:
einer Auflagefläche, wobei die genannte Auflagefläche und der zugehörige Kopf (100) so angeordnet sind, dass die Zugriemen (2.3, 2.4) des genannten Kopfes (100) die Lagen (L) an die genannte Auflagefläche andrücken; und
einem Auflagekopf (102), umfassend ein erstes Antriebsrad (102.1) mit einer ersten in der zweiten Richtung (T) verlaufenden Mittelwelle (102.10) und ein zweites Antriebsrad (102.2) mit einer parallel zur ersten Mittelwelle (102.10) verlaufenden und von der genannten ersten Mittelwelle (102.10) in der ersten Richtung (A) beabstandeten zweiten Mittelwelle (102.20), einen auf den beiden Antriebsrädern (102.1, 102.2) aufgezogenen ersten Zugriemen (102.3) und einen auf den beiden Antriebsrädern (102.1, 102.2) parallel zum ersten Zugriemen (102.3) aufgezogenen zweiten Zugriemen (102.4), der durch den Trennspalt (D) in der zweiten Richtung (T) von dem ersten Zugriemen getrennt ist, wobei der genannte Auflagekopf (102) und der zugehörige Schweißkopf (100) so angeordnet sind, dass die Lagen (L) zwischen den entsprechenden Zugriemen (2.3, 2. 4) der beiden Köpfe (100, 102) zusammengedrückt werden, wobei der Auflagekopf (102) ferner im Bereich der dem zugehörigen Schweißkopf (100) gegenüberliegenden Zugriemen (102.1, 102.2) eine Auflagefläche auf derselben Höhe wie die genannten Zugriemen (102.1, 102.2) des genannten Auflagekopfes (102) aufweist, wobei die genannte Auflagefläche dem Schweißbereich (3) gegenüberliegt.

14. Anlage zur Herstellung von Verpackungen mit Pads, **dadurch gekennzeichnet, dass** sie mindestens eine Schweißstation (500) nach einem der Ansprüche 1 bis 13 umfasst.

## Revendications

1. Poste de soudage (500) comprenant une pluralité de têtes de soudage longitudinal (100) pour une installation de fabrication de paquets avec tampons, chaque tête (100) étant configurée pour souder l'une à l'autre deux feuilles superposées (L) au fur et à mesure que lesdites feuilles (L) avancent dans une première direction (A), chaque tête (100) comprenant un dispositif de soudage configuré pour appliquer de la chaleur sur une zone d'action déterminée (3) de ladite tête (100) ou en face de ladite tête (100), une première courroie de traction (2.3) et une deuxième courroie de traction (2.4) parallèle à la première courroie de traction (2.3) et séparée de la première courroie de traction (2.3) par un espace de séparation déterminé (D) dans une deuxième direction (T) qui est transversale à la première direction (A), la zone d'action (3) étant disposée dans ledit espace de séparation (D) entre les deux courroies de traction (2.3, 2.4), ou faisant face audit espace de séparation (D), et chacune des têtes de soudage (100) étant configurée pour pouvoir se déplacer le long de la deuxième direction (T).

2. Poste de soudage selon la revendication 1, dans lequel chaque tête (100) comprend une première roue motrice (2.1) avec un premier arbre central (2.10) s'étendant dans la deuxième direction (T) et une deuxième roue motrice (2.2) avec un deuxième arbre central (2.20) parallèle au premier arbre central (2.10) et éloigné dudit premier arbre central (2.10) dans la première direction (A), les deux courroies de traction (2.3, 2.4) étant enroulées dans les deux roues motrices (2.1, 2.2).

3. Poste de soudage selon la revendication 2, dans lequel chaque tête (100) comprend un élément de séparation (4) relié à, ou disposé dans, chacune des roues motrices (2.1, 2.2), la première courroie de traction (2.3) étant d'un côté dudit élément de séparation (4) par rapport à l'arbre central correspondant (2.10) et la seconde courroie de traction (2.4) étant de l'autre côté dudit élément de séparation (4), ledit élément de séparation (4) comprenant une largeur dans la seconde direction (T) égale à la largeur de l'espace de séparation (D).

4. Poste de soudage selon la revendication 3, dans lequel la surface extérieure de l'élément de séparation (4) de chaque tête (100) est au même niveau que la surface extérieure des courroies de traction (2.3, 2.4) ou est constituée d'un matériau malléable faisant saillie par rapport à ladite surface extérieure des courroies de traction (2.3, 2.4).

5. Poste de soudage selon l'une des revendications 2 à 4, dans lequel chaque roue motrice (2.1, 2.2) comprend une rainure respective pour chaque courroie de traction (2.3, 2.4), chaque rainure étant configurée pour loger la courroie de traction correspondante (2.3) et les deux rainures d'une même roue motrice (2.3, 2.4) étant séparées d'une distance égale à la largeur de l'espace de séparation (D).

6. Poste de soudage selon l'une des revendications 2 à 4, dans lequel les deux roues motrices (2.1, 2.2) sont des roues dentées et les courroies de traction (2.3, 2.4) présentent une configuration complémentaire aux dents desdites roues motrices (2.1, 2.2).

7. Poste de soudage selon l'une des revendications 1 à 6, dans lequel chaque tête (100) comprend un dispositif de maintien (7) avec au moins un élément de maintien (7.0) disposé en aval de la zone d'action (3) dans la première direction (A) et configuré pour presser les feuilles soudées (L).

8. Poste de soudage selon la revendication 7, dans lequel le dispositif de retenue (7) comprend plusieurs éléments de retenue (7.0) disposés en série dans la première direction (A).

9. Poste de soudage selon la revendication 8, dans lequel les éléments de maintien (7.0) sont configurés pour pouvoir contrôler indépendamment la force de pression qu'ils peuvent exercer sur les feuilles (L).

10. Poste de soudage selon l'une des revendications 1 à 9, dans lequel chaque tête (100) comprend un dispositif de refroidissement pour refroidir l'espace de séparation (D) présent entre les deux courroies de traction (2.3, 2.4), au moins en aval de la zone d'action (3) dans la première direction (A).

11. Poste de soudage selon l'une des revendications 1 à 10, dans lequel chaque dispositif de soudage comprend un émetteur laser émettant un faisceau laser vers la zone d'action (3), directement ou au moyen d'éléments supplémentaires disposés entre ledit dispositif de soudage et ladite zone d'action (3) pour rediriger ledit faisceau laser vers ladite zone d'action (3).

12. Poste de soudage selon l'une quelconque des revendications 1 à 11, comprenant un support associé à chaque tête (100), ledit support étant en regard de la tête (100) associée et configuré pour que les tôles (L) se déplacent sur lui dans la première direction (A), un support et la tête (100) associée étant agencés pour que les tôles se déplacent entre les courroies de traction (2.3, 2.4) et ledit support, et la tête (100) comprenant un actionneur (6) disposé en amont de la zone d'action (3) dans la première direction (A) et configuré pour pousser les tôles (L) à souder contre le support associé, l'actionneur (6) comprenant une roue et le support associé comprenant une dépression complémentaire à la roue de l'actionneur (6) et en regard de ladite roue.

13. Poste de soudage selon l'une quelconque des revendications 1 à 11, comprenant un support associé à chaque tête (100), ledit support étant en regard de la tête associée (100) et configuré pour que les tôles (L) se déplacent dans la première direction (A) entre ledit support et ladite tête associée (100), le support et la tête associée (100) étant en regard l'un de l'autre et ledit support étant choisi parmi
une surface de support, ladite surface de support et la tête associée (100) étant disposées de telle sorte que les courroies de traction (2.3, 2.4) de ladite tête (100) pressent les feuilles (L) contre ladite surface de support ; et
une tête de support (102) comprenant une première roue motrice (102.1) avec un premier arbre central (102.10) s'étendant dans la deuxième direction (T) et une deuxième roue motrice (102.2) avec un deuxième arbre central (102.20) s'étendant parallèlement au premier arbre central (102.10) et éloigné dudit premier arbre central (102.10) dans la première direction (A), une première courroie de traction (102.3) enroulée dans les deux roues motrices (102.1, 102.2), et une deuxième courroie de traction enroulée dans les deux roues motrices (102.1, 102.2) parallèlement à la première courroie de traction et séparée de la première courroie de traction par l'espace de séparation (D) dans la deuxième direction (T), ladite tête de support (102) et la tête associée (100) étant disposées de manière à ce que les feuilles (L) soient pressées entre les courroies de traction correspondantes (2.3, 2. 4) des deux têtes (100, 102), la tête de support (102) comprenant en outre une surface de support qui est au même niveau que les courroies de traction (102.1, 102.2) de ladite tête de support (102), dans la partie desdites courroies de traction (102.1, 102.2) faisant face à la tête de soudage associée (100), ladite surface de support faisant face à la zone de soudage (3).

14. Installation de fabrication de paquets avec tampons, **caractérisée en ce qu'**elle comprend au moins un poste de soudure (500) selon l'une quelconque des revendications 1 à 13.
